# EUROPEAN PATENT SPECIFICATION

(11) **EP 4 621 117 B1**
(45) Date of publication and mention of the grant of the patent: **28.10.2026**
(21) Application number: 24165261.9
(22) Date of filing: 21.03.2024
(51) Int. Cl.: D03D 15/547, F21V 8/00, G02B 6/02

(54) **METHOD FOR ACTIVATING A LIGHTING TEXTILE**
VERFAHREN ZUR AKTIVIERUNG EINER LEUCHTTEXTILIE
PROCÉDÉ D'ACTIVATION D'UN TEXTILE D'ÉCLAIRAGE

(43) Date of publication of application: 24.09.2025
(73) Proprietor: Motherson Innovations Company Limited, London E14 5HU (GB)
(72) Inventor: Nogaret, Eric, 68600 Biesheim (FR); Buchet, Yann, 67000 Strasbourg (FR); Pignard, Pierre, 68320 Jebsheim (FR); Willaredt, Bastian, 79312 Emmendingen (DE)
(74) Representative: Westphal, Mussgnug & Partner Patentanwälte mbB

(56) References cited:
- WO-A1-2022/065307
- CN-A- 107 804 058
- US-A1- 2016 122 911

## Description

Lighting textiles are textile with woven in optical fibers. In typical applications of lighting textiles, light is fed into said optical fibers and passes through them, typically by total internal reflection within the fiber. Illumination of a specific region of the lighting textile can then be achieved by inducing micro-damage in the outer layer of the optical fibers. Currently, this process is typically performed by blasting particles, e.g. sand or polymer particles, onto those parts of a flat surface of the lighting textile which are to be activated, i.e. where a lighting effect is to be achieved.

The disadvantage of this approach is that unfortunately particles used for the purpose of activation frequently tend to get trapped inside the textile and thus pollute it. During further processing of the textile, some of them may be set free in an uncontrolled way, leading to a contamination of the production area, damage to production equipment or rejects and possibly also make it difficult to comply with specifications for the lighting textile that demand that it should tend to be particle-free after production.

Accordingly, the problem to be solved by the invention is providing an improved method for activating a lighting textile which reduces the number of particles that become trapped inside the textile during the activation process.

This problem is solved by a method for activating a lighting textile with the features of claim 1. The features of the dependent claims can be used for advantageous embodiments of the method.

According to the method for activation of a lighting textile of this invention, a lighting textile is provided, moved past a particle source and activated by blasting a surface of the lighting textile with particles while it is being moved past said particle source. It is characteristic for the method of this invention that the lighting textile is bent in such a way that a convex surface of the lighting textile is facing the particle source when the lighting textile is blasted.

This bending brings about a reduction of the number of particles for two reasons: First of all, due to the concave shape given by the bending (e.g. when using a roll, which may, e.g., have a diameter between 3mm and 20mm and preferably between 10mm and 15 mm), the fabric mesh is opened on the surface facing the particle source, which makes it easier for particles that have been blasted into the fabric to leave it or fall out of it. As described below, it is a preferable option to support this process with vibration or suction.

Apart from that, in contrast to situations where a flat area is blasted with particles, due to the concave surface in considerable parts of the area which interacts with the particles, the particles do no longer propagate in an essentially normal direction into the lighting textile, but under a glancing angle, which makes it more likely that the particles do not penetrate deeply into the lighting textile and thus removal of the particles easier.

A preferred way of realizing the above-described bending is obtained by running the lighting textile over a roller. As a consequence of running the lighting textile over the roller (as opposed to running it on a roller), at least one component of the direction of movement of the lighting textile is reversed. Running the lighting textile over the roller leads to a precise definition of the convex shape that can be easily adapted to the specific requirements by adequate choice of the geometry of the roller. Moreover, such a roller can easily be integrated into a textile processing line.

Also, a roller can be vibrated in order to provide vibrations that assist the particle removal, as mentioned above.

In the above-described configuration, preferably the particle source is positioned in front of the roller and shoots the particles toward the textile roller. An alternative abstract description for such a favourable positioning is that the particle source is positioned opposite of the apex of the lighting textile on the roller, which apex is defined by the line on the roller at which the component of the direction of movement of the lighting textile which is reversed changes its sign.

By the positioning of the particle source that is described in the previous paragraph, the divergence of the particle beam reinforces the effectiveness of the convex surface geometry as the glancing angle effect described above is increased.

According to another preferred embodiment of the method, the lighting textile is run over the roller in such a way that the surface that has been blasted with particles is facing in a downward direction. According to this disclosure, a surface that has been blasted is facing in a downward direction if the surface normal on this surface has a downward-facing component. In this configuration, gravity will assist the particle removal. This effect can be maximized, if the apex of the lighting textile on the roller is oriented in a horizontal direction.

The unwanted accumulation of particles in the lighting textile as a result of the activation process is reduced further, if a mask is arranged between the lighting textile and the particle source, especially as divergence of the particle beam can be controlled effectively in this way. Preferably, the opening of the mask has the shape of a line or a rectangular shape whose length is much larger that its width. A preferred size of the opening and/or width of the line is between 1 and 10mm, preferably about 5mm.

The controlled removal of particles from the lighting textile can be promoted if a vacuum system is used to support the removal of particles from the textile. Furthermore, the use of the vacuum system counteracts local pollution of the production area by particles that are removed from the lighting textile.

According to one embodiment of the method, the blasting on a surface of the lighting textile with particles can be done by sandblasting. Alternatively, the blasting on a surface of the lighting textile with particles can be done by polymer particle blasting.

US 2016/122911 A discloses a woven luminous fabric that integrates glass fibre as structural binding yarns together with **side-emitting** optical fibres to create a textile capable of high, uniform illumination while also offering excellent fire resistance. It explains how using a high proportion of glass yarns (≥50% of binding fibers) improves flame behavior, mechanical strength, optical efficiency, and durability, while detailing weaving parameters, fiber dimensions, coatings, and surface treatments that enable industrial production without damaging the optical fibers. Next, the invention is explained in more detail using figures showing examples. The figures show:
- Fig. 1:: A schematic representation of a method for activation of a lighting textile according to the state of the art, and
- Fig. 2:: an embodiment of a method for activation of a lighting textile according to the invention.

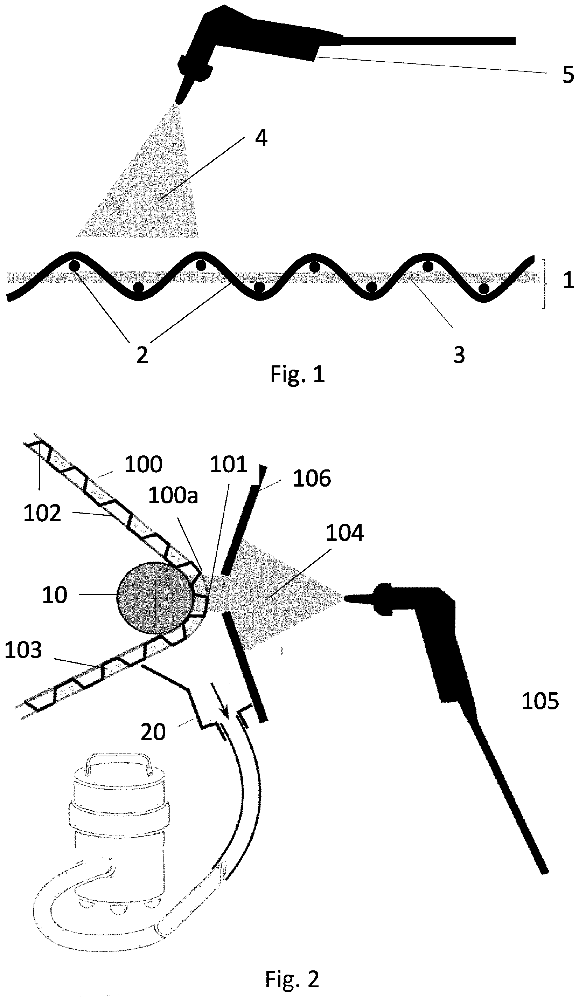

Figure 1 shows a schematic representation of a method for activation of a lighting textile 1 according to the state of the art. The lighting textile 1, which is formed by interwoven textile fibers 2 in which optical fibers 3 are embedded, is brought within a processing line into a planar configuration and blasted with particles 4 emerging from a particle source 5. As a result, the optical fibers 3 are activated by interaction with the particles 4, but particles remain inside the lighting textile at least temporarily and are at best removed in later processing steps in an uncontrolled way, unless they happen to stay inside the activated lighting textile, which may not be in accordance with the lighting textile's specification. Even if the planar configuration is positioned vertically, so that particles can theoretically fall down, in practice falling particles are getting into contact with the textile underneath. In addition, the entire textile surface is exposed to overspray and the dusty atmosphere of the particle blasting cabin.

In the embodiment of the invention shown in Figure 2, the lighting textile 100 is also formed by interwoven textile fibers 102 in which optical fibers 103 are embedded. The lighting textile is run over a roller 10, which provides a surface area of the lighting textile 100 with a convex shape 100a.

Prior to the roller 10, the lighting textile 100 moves in a direction with the movement components right and down; after passing the roller 10 it moves in a direction with the movement components left and down. Accordingly, the surface area of the lighting textile 100 with the convex shape 100a has an apex 101 where the sideways component of movement switches from left to right, and the apex 101 faces in the horizontal direction.

A particle source 105 is positioned in front of the roller 10 and shoots/blasts the particles toward the textile on the roller. Accordingly, the particle source 105 , which blasts particles 104 onto the lighting textile 100 in order to activate it, is positioned opposite of the apex 101. A mask 106 is arranged between the lighting textile 100 and the particle source 105, which limits the divergence of the particles 104 and thus reduces the amount of contamination of the lighting textile 100 with particles 104.

Moreover, due to the convex shape 100a the mesh of the textile fibers 102, especially near the outer surface that faces away from the roller, is opened and thus it becomes less likely that a particle 104 is entangled in the lighting textile 100.

Furthermore, due to the fact that the lighting textile 100 is run over the roller 10 in such a way that the surface that has been blasted with particles 104 is facing in a downward direction afterwards, the influence of gravity will assist in the removal of particles 104 from the lighting textile 100.

In addition, a vacuum system 20 is assisting in the removal and collection of particles 104.

Further assistance for the removal of particles 104 can be obtained by vibrating the roller 10.

### Reference Numerals

- 1, 100: lighting textile
- 2, 102: textile fibers
- 3, 103: optical fibers
- 4, 104: particles
- 5, 105: particle source
- 10: roller
- 20: vacuum system
- 100a: convex shape
- 101: apex
- 106: mask

## Claims

1. A method for activation of a lighting textile (100),
wherein a lighting textile (100) is provided, moved past a particle source (105) and activated by blasting a surface of the lighting textile (100) with particles (104) while the surface is being moved past said particle source (105), **characterized in that** the lighting textile (100) is bent in such a way that a convex surface (100a) of the lighting textile (100) is facing the particle source (105) when it is blasted with particles (104).

2. The method of claim 1, wherein said bending of the lighting textile (100) is obtained by running the lighting textile (100) over a roller (10).

3. The method of claim 2, wherein the roller (10) is vibrated.

4. The method of claim 2 or 3, wherein the particle source (105) is positioned in front of the roller (10) and shoots the particles toward the textile on the roller (10).

5. The method of one of claims 2 to 4, wherein the lighting textile (100) is run over the roller (10) in such a way that the surface that has been blasted with particles (104) is facing in a downward direction.

6. The method of one of claims 1 to 5, wherein a mask (106) is arranged between the lighting textile (100) and the particle source (105).

7. The method of claim 6, wherein the opening of the mask has the shape of a line.

8. The method of claim 6 or 7, wherein in the size of the opening is between 1 and 10mm, preferably about 5mm.

9. The method of one of claims 1 to 8, wherein a vacuum system (20) is used to support the removal of particles (104) from the lighting textile (100).

10. The method of one of claims 1 to 9, wherein the blasting of a surface of the lighting textile (100) with particles (104) is done by sandblasting.

11. The method of one of claims 1 to 10, wherein the blasting of a surface of the lighting textile (100) with particles (104) is done by polymer particle blasting.

## Patentansprüche

1. Verfahren zur Aktivierung einer Leuchttextilie (100), bei dem eine Leuchttextile (100) bereitgestellt, an einer Partikelquelle (105) vorbeigeführt und aktiviert wird, indem eine Oberfläche der Leuchttextilie (100) mit Partikeln (104) beschossen wird, während die Oberfläche an der Partikelquelle (105) vorbeigeführt wird, **dadurch gekennzeichnet, dass** die Leuchttextilie (100) derart gebogen wird, dass eine konvexe Oberfläche (100a) der Leuchttextilie (100) der Partikelquelle (105) zugewandt ist, wenn sie mit Partikeln (104) beschossen wird.

2. Verfahren nach Anspruch 1, wobei das Biegen der Leuchttextilie (100) durch erreicht wird, indem die Leuchttextilie (100) über eine Walze (10) laufen gelassen wird.

3. Verfahren nach Anspruch 2, wobei die Walze (10) vibriert wird.

4. Verfahren nach Anspruch 2 oder 3, wobei die Partikelquelle (105) vor der Walze (10) positioniert ist und die Partikel in Richtung der Textilie auf der Walze (10) schießt.

5. Verfahren nach einem der Ansprüche 2 bis 4, wobei die Leuchttextilie (100) derart über die Walze (10) laufen gelassen wird, dass die Oberfläche, die mit Partikeln (104) beschossen wurde, in eine Richtung nach unten zeigt.

6. Verfahren nach einem der Ansprüche 1 bis 5, wobei zwischen der Leuchttextilie (100) und der Partikelquelle (105) eine Maske (106) angeordnet wird.

7. Verfahren nach Anspruch 6, wobei die Öffnung der Maske die Form einer Linie aufweist.

8. Verfahren nach Anspruch 6 oder 7, wobei die Größe der Öffnung zwischen 1 und 10 mm, vorzugsweise etwa 5 mm, beträgt.

9. Verfahren nach einem der Ansprüche 1 bis 8, wobei ein Vakuumsystem (20) eingesetzt wird, um das Entfernen von Partikeln (104) von der Leuchttextilie (100) zu unterstützen.

10. Verfahren nach einem der Ansprüche 1 bis 9, wobei das Beschießen einer Oberfläche der Leuchttextilie (100) mit Partikeln (104) durch Sandstrahlen erfolgt.

11. Verfahren nach einem der Ansprüche 1 bis 10, wobei das Beschießen einer Oberfläche der Leuchttextilie (100) mit Partikeln (104) durch Polymerpartikelstrahlen erfolgt.

## Revendications

1. Un procédé d'activation d'un textile (100) d'éclairage, dans lequel on se procure un textile (100) d'éclairage, on le fait passer devant une source (105) de particules et on l'active en soumettant une surface de textile (100) d'éclairage à des particules (104), alors que la surface passe devant ladite source (105) de particules, **caractérisé en ce que** le textile (100) d'éclairage est courbé d'une telle manière qu'une surface (100a) convexe du textile (100) d'éclairage fait face à la source (105) de particules, lorsqu'elle est soumise à des particules (104).

2. Le procédé de la revendication 1, dans lequel ladite courbure du textile (100) d'éclairage est obtenue en faisant passer le textile (100) d'éclairage sur un rouleau (10).

3. Le procédé de la revendication 2, dans lequel on fait vibrer le rouleau (10).

4. Le procédé de la revendication 2 ou 3, dans lequel la source (105) de particules est en position en face du rouleau (10) et envoie les particules vers le textile sur le rouleau (10).

5. Le procédé de l'une des revendications 2 à 4, dans lequel le textile (100) d'éclairage passe sur le rouleau (10) d'une façon telle que la surface, qui a été soumise à des particules (104) fait face à une direction vers le bas.

6. Le procédé de l'une des revendications 1 à 5, dans lequel un masque (106) est disposé entre le textile (100) d'éclairage et la source (105) de particules.

7. Le procédé de la revendication 6, dans lequel l'ouverture du masque a la forme d'une ligne.

8. Le procédé de la revendication 6 ou 7, dans lequel la dimension de l'ouverture est comprise entre 1 et 10 mm, en étant de préférence d'environ 5 mm.

9. Le procédé de l'une des revendications 1 à 8, dans lequel un système (20) à vide est utilisé pour appuyer l'élimination de particules (104) du textile (100) d'éclairage.

10. Le procédé de l'une des revendications 1 à 9, dans lequel la soumission d'une surface du textile (100) d'éclairage à des particules (104) est effectuée par grenaillage.

11. Le procédé de l'une des revendications 1 à 10, dans lequel la soumission d'une surface du textile (100) d'éclairage à des particules (104) est effectuée par soumission à des particules de polymère.
